# EUROPEAN PATENT APPLICATION

(11) **EP 4 811 174 A1**
(43) Date of publication of application: **23.09.2026**
(21) Application number: 23961748.3
(22) Date of filing: 18.12.2023
(51) Int. Cl.: G06F 16/9032

(54) **DATA PROCESSING METHOD AND APPARATUS BASED ON LARGE LANGUAGE MODEL, AND DEVICE**

(71) Applicant: New H3C Technologies Co., Ltd., Hangzhou, Zhejiang 310052 (CN)
(72) Inventor: WANG, Minghui, Beijing 100102 (CN)
(74) Representative: 2SPL Patentanwälte PartG mbB
(86) International application number: PCT/CN2023/139569
(87) International publication number: WO 2025/129400

(57) **Abstract**

Provided in the present application are a data processing method and apparatus based on a large language model, and a device. The method comprises: acquiring a first input question in an original data format, and if the original data format is not a text data format, converting the first input question into a second input question in the text data format; inputting the second input question into a trained target large language model, and outputting a first target answer in the text data format by the target large language model, which first target answer corresponds to the second input question; and converting the first target answer into a second target answer in the original data format. By means of the technical solution of the present application, computing resources of a server can be saved on, time overheads are saved on, and a target answer corresponding to an input question can be quickly determined.

## Description

### TECHNICAL FIELD

The present disclosure relates to the field of artificial intelligence technology, and in particular to a data processing method, apparatus and device based on a Large Language Model (LLM).

### BACKGROUND

With the rapid development of network technology, there is an increasing amount of network data. To retrieve data required by a user from a large amount of network data, keywords need to be provided by the user, and a server retrieves the data required by the user from a large amount of network data based on the keywords.

However, due to the large amount of network data, the server needs to consume a lot of computing resources to retrieve data required by a user, and the server needs to spend a lot of time, resulting in a lot of resource consumption by the server, and it takes a long time for the user to obtain the required data. For example, in a practical scenario, a large number of cameras will be deployed, these cameras will collect a large number of images. In order to analyze data required by a user from these images, a server needs to consume a lot of computing resources and spend a lot of time.

### SUMMARY

In view of this, the present disclosure provides a data processing method, apparatus and device based on a large language model, which can save server computing resources of a server and time overhead, and can quickly determine a target answer.

The present disclosure provides a data processing method based on a large language model, the method includes:
obtaining a first input question in an original data format; if the original data format is not a text data format, converting the first input question into a second input question in a text data format;
inputting the second input question to a trained target large language model, a first target answer in a text data format corresponding to the second input question being output by the target large language model; and
converting the first target answer into a second target answer in the original data format.

The present disclosure provides a data processing apparatus based on a large language model, the apparatus includes:
an obtaining module, configured to obtain a first input question in an original data format; if the original data format is not a text data format, convert the first input question into a second input question in a text data format;
a processing module, configured to input the second input question to a trained target large language model, a first target answer in a text data format corresponding to the second input question being output by the target large language model; and
a converting module, configured to convert the first target answer into a second target answer in the original data format.

The present disclosure provides an electronic device, including a processor and a machine-readable storage medium, where the machine-readable storage medium stores machine-executable instructions executable by the processor, and the processor is configured to execute the machine-executable instructions to implement the above-mentioned data processing method based on a large language model.

It can be seen from the above technical solution that in the embodiments of the present disclosure, the first input question can be converted into the second input question in the text data format, and the second input question can be inputted into the target large language model. The first target answer in the text data format corresponding to the second input question is output by the target large language model, and the first target answer is converted into the second target answer in the original data format. In this way, the target answer can be obtained by means of the target large language model, and an accurate and reliable target answer is obtained through inputting the input question in the text data format. It only needs to consume a small amount of computing resources to query the target answer corresponding to the input question from a large amount of data. It takes less time to obtain the target answer, thereby saving computing resources of the server and time overhead. The target answer corresponding to the input question can be quick determined, logical analysis and reasoning capabilities are provided, and an accurate and reliable target answer is given by using the analysis capability of the target large language model. Moreover, multimodal data (for example, images, videos, speeches and other data) is converted into text data and the text data is input to the target large language model, which enables the target large language model to support multimodal data. The target large language model only needs to support input and output of text data, so as to meet input and output requirements of multimodal data, and support functions of a multimodal large language model.

### BRIEF DESCRIPTION OF THE DRAWINGS

To more clearly illustrate the technical solution in embodiments of the present disclosure or in the prior art, accompanying drawings required in the description of the embodiments of the present disclosure or the prior art will be briefly introduced below. Apparently, the drawings described below are only some examples recorded in the present disclosure. For those skilled in the art, other drawings can be obtained based on these drawings of the embodiments of the present disclosure.
FIG. 1 is a schematic flowchart of a data processing method based on a large language model in an embodiment.
FIG. 2 is a schematic structural diagram of a target large language model in an embodiment.
FIG. 3 is a schematic flowchart of a data processing method based on a large language model in an embodiment.
FIG. 4A is a schematic diagram of BLIP2 algorithm in an embodiment.
FIG. 4B is a schematic diagram of whisper algorithm in an embodiment.
FIG. 4C is a schematic diagram of SD algorithm in an embodiment.
FIG. 5 is a schematic structural diagram of a data processing apparatus based on a large language model in an embodiment.
FIG. 6 is a hardware structure diagram of an electronic device in an embodiment.

### DETAILED DESCRIPTION OF THE EMBODIMENTS

Terms used in the embodiments of the present disclosure are for the purpose of describing specific embodiments only, and are not intended to limit the present disclosure. The singular forms "a" ("an"), "the" and "this" used in the embodiments of the present disclosure and the appended claims are also intended to include plural forms, unless the context clearly indicates other meanings. It should also be understood that the term "and/or" as used herein refers to any or all possible combinations including one or more of associated listed items.

It should be understood that although terms first, second, third, etc. may be used in the embodiments of the present disclosure to describe various information, such information should not be limited to these terms. These terms are only used to distinguish the same type of information from each other. For example, first information may also be referred to as second information, and similarly, the second information may also be referred to as the first information without departing from the scope of the present disclosure. Depending on the context, the word "if" as used herein can be interpreted as "at the time of", "when" or "in response to determining".

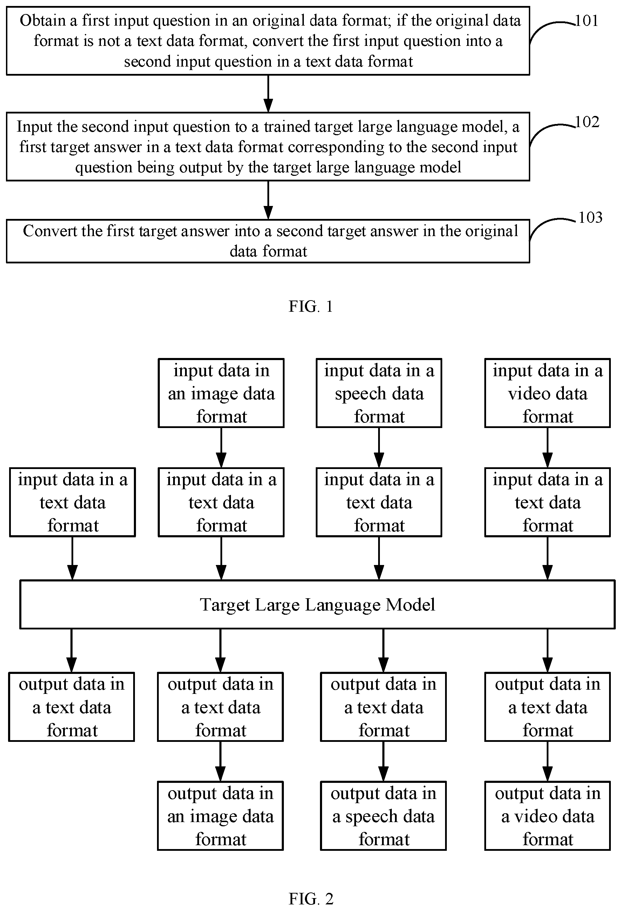

An embodiment of the present disclosure proposes a data processing method based on a large language model, which can be applied to any electronic device, such as a server. As shown in FIG. 1, the method can include steps 101 to 103.

In step 101, a first input question in an original data format is obtained; if the original data format is not a text data format, the first input question is converted into a second input question in a text data format.

In step 102, the second input question is input to a trained target large language model, a first target answer in a text data format corresponding to the second input question being output by the target large language model.

In step 103, the first target answer is converted into a second target answer in the original data format.

In an example, converting the first input question into the second input question in the text data format may include, but is not limited to: if the original data format is an image data format, converting the first input question in the image data format into the second input question in the text data format by adopting an image-to-text conversion algorithm;
or, if the original data format is a speech data format, converting the first input question in the speech data format into the second input question in the text data format by adopting a speech-to-text conversion algorithm;
or, if the original data format is a video data format, converting the first input question in the video data format into the second input question in the text data format by adopting a video-to-text conversion algorithm.

In an example, converting the first target answer into the second target answer in the original data format may include, but is not limited to: if the original data format is an image data format, converting the first target answer in the text data format into the second target answer in the image data format by adopting a text-to-image conversion algorithm;
or, if the original data format is a speech data format, converting the first target answer in the text data format into the second target answer in the speech data format by adopting a text-to-speech conversion algorithm;
or, if the original data format is a video data format, converting the first target answer in the text data format into the second target answer in the video data format by adopting a text-to-video conversion algorithm.

In an example, inputting the second input question to the trained target large language model, the first target answer in the text data format corresponding to the second input question being output by the target large language model, may include, but is not limited to: obtaining a first token identifier and a second token identifier corresponding to the original data format;
adding the first token identifier before the second input question and adding the second token identifier after the second input question; where the first token identifier indicates a starting position of the second input question, and the second token identifier indicates an ending position of the second input question;
inputting the second input question after modifying to the target large language model, the first target answer in a text data format corresponding to the second input question being output by the target large language model.
where, the first target answer is preceded by the first token identifier, the first target answer is followed by the second token identifier, the first token identifier indicates a starting position of the first target answer, and the second token identifier indicates an ending position of the first target answer.

In an example, converting the first target answer into the second target answer in the original data format includes: based on data content output by the target large language model, determining data content between the first token identifier and the second token identifier as the first target answer; determining the original data format corresponding to the first token identifier or the second token identifier; converting the first target answer into the second target answer in the original data format.

In an example, after obtaining a first input question in the original data format, if the original data format is a text data format, then the first input question is directly inputted into the trained target large language model. A first target answer in a text data format corresponding to the first input question is output by the target large language model.

In an example, a training process for the target large language model may include, but is not limited to: obtaining a sample data set, where the sample data set may include a plurality of sample questions and sample labels corresponding to the plurality of sample questions, where the plurality of sample questions can be in a text data format, and the sample labels can be in a text data format;
based on one or more sample questions (for example, the plurality of sample questions) and sample labels corresponding to the one or more sample questions in the sample data set, training an initial large language model to be trained to obtain a trained candidate large language model; and
taking the candidate large language model as the target large language model; or,
selecting a part of the plurality of the sample questions from the sample data set as reference sample questions, for each of the reference sample questions, adding a first token identifier in any data format before the reference sample question, adding a second token identifier in the data format after the reference sample question, and based on the reference sample questions after modifying and sample labels corresponding to the reference sample questions, training the candidate large language model to obtain the target large language model.

In an example, the above execution order is only for the convenience of describing the given examples. In practical application, the execution order between steps can also be changed, and there is no limitation on the execution order. Moreover, in other embodiments, steps of the corresponding method are not necessarily executed in the order shown and described in this specification, and the method may include more or less steps than those described in this specification. In addition, a single step described in this specification may be decomposed into multiple steps for description in other embodiments. The steps described in this specification may be combined into a single step in other embodiments.

It can be seen from the above technical solution that in the embodiments of the present disclosure, the first input question can be converted into the second input question in the text data format, and the second input question can be inputted into the target large language model. The first target answer in the text data format corresponding to the second input question is output by the target large language model, and the first target answer is converted into the second target answer in the original data format. In this way, the target answer can be obtained by means of the target large language model, and an accurate and reliable target answer is obtained through inputting the input question in the text data format. It only needs to consume a small amount of computing resources to query the target answer corresponding to the input question from a large amount of data. It takes less time to obtain the target answer, thereby saving computing resources of the server and time overhead. The target answer corresponding to the input question can be quick determined, logical analysis and reasoning capabilities are provided, and an accurate and reliable target answer is given by using the analysis capability of the target large language model. Moreover, multimodal data (for example, images, videos, speeches and other data) is converted into text data and the text data is input to the target large language model, which enables the target large language model to support multimodal data. The target large language model only needs to support input and output of text data, so as to meet input and output requirements of multimodal data, and support functions of a multimodal large language model.

The above technical solution in the embodiments of the present disclosure will be described below in combination with specific application scenarios.

Due to the large amount of network data (for example, text data, video data, speech data, image data, etc.), the server needs to consume a lot of computing resources to retrieve the data required by a user and needs to spend a lot of time, resulting in a lot of resource consumption by the server, and it takes a long time for the user to obtain the required data. For example, in a practical scenario, a large number of cameras will be deployed, these cameras will collect a large number of images. In order to analyze data required by a user from these images, a lot of computing resources needs to be consumed and a lot of time will be spent.

In view of the above findings, the data can be analyzed by means of a Large Language Model (LLM). For example, question data is input into the large language model, and a target answer is output by the large language model. In this way, it only needs to consume a small amount of computing resources to query the target answer corresponding to the question data from a large amount of data. It takes less time to obtain the target answer, thereby saving computing resources of the server and time overhead, and an accurate and reliable target answer is given by using the analysis capability of the large language model.

For example, ChatGPT is a large language model based on natural language processing and machine learning, and can simulate human language communication and realize intelligent dialogue with users. ChatGPT has been widely applied in fields like intelligent customer service, chatbots, voice assistants, etc., providing people with more convenient, fast, and intelligent services. Based on this, ChatGPT can be used to analyze the data and obtain the target answer corresponding to the question data.

With the rapid development of artificial intelligence, a multimodal large language model have been proposed and used. The multimodal large language model supports that input data is video data, speech data, image data, and text data. That is, when inputting question data which is video data, speech data, image data, and text data into the multimodal large language model, the multimodal large language model can output a target answer corresponding to the question data. That is, the multimodal large language model can process question data in various formats.

In order to realize the above function, it is necessary to train the multimodal large language model with multimodal data to obtain a trained multimodal large language model. That is, it is necessary to train the multimodal large language model with video data, speech data, image data and text data. In order to train the multimodal large language model, it is necessary to prepare a large amount of high-quality data, such as video data, speech data, image data and text data, and the training cost is relatively high. The server needs to consume significant computing resources to complete the training of the multimodal large language model, and it takes a considerable amount of time to complete the training.

When using the multimodal large language model, the model involves processes such as encoding, decoding, and linear adaptation. The data inputted into the multimodal large language model is embedding data after linear adaptation. Such linear adaptation needs to be performed at both an input side and an output side. Based on this, alignment training needs to be performed for the multimodal large language model and Linear Projector (or referred to as Adaptor, for example, full connection layer, etc.). This alignment training needs to prepare a large amount of high-quality data, and the training cost is high.

In view of the above findings, the present disclosure provides a data processing method based on a large language model. Multimodal data (for example, images, videos, speeches and other data) is converted into text data and the text data is input to the target large language model, which enables the target large language model to support multimodal data. The target large language model only needs to support input and output of text data, thereby meeting input and output requirements of multimodal data and supporting multimodal functions. For example, a target large language model under a unified multimodal architecture is designed, where both input and output of the target large language model are in text form, thus avoiding alignment training on the input side and the output side.

FIG. 2 is a schematic structural diagram of a target large language model in an embodiment. Input data of the target large language model is in a text data format, and output data of the target large language model is also in a text data format. For example, the input data in a text data format is provided to the target large language model, and output data in a text data format is output after the input data is processed by the target large language model.

As shown in FIG. 2, if input data in an image data format is obtained, the input data in the image data format is converted into input data in a text data format. The input data in the text data format is provided to the target large language model, and output data in a text data format is output by the target large language model. Then, the output data in the text data format is converted into output data in an image data format.

As shown in FIG. 2, if input data in a speech data format is obtained, the input data in the speech data format is converted into input data in a text data format. The input data in the text data format is provided to the target large language model, and output data in a text data format is output by the target large language model. Then, the output data in the text data format is converted into output data in a speech data format.

As shown in FIG. 2, if input data in a video data format is obtained, the input data in the video data format is converted into input data in a text data format. The input data in the text data format is provided to the target large language model, and output data in a text data format is output by the target large language model. Then, the output data in the text data format is converted into output data in a video data format.

As shown in FIG. 2, if input data in a text data format is obtained, the input data in the text data is directly provided to the target large language model, and output data in a text data format is output by the target large language model. In this way, the output data in the text data format can be directly obtained.

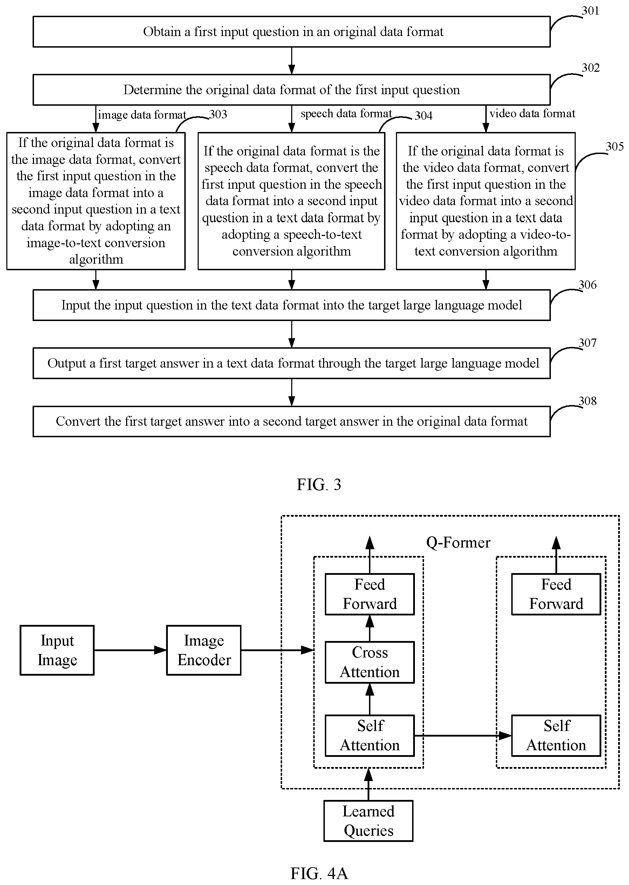

Based on the trained target large language model, an embodiment of the present disclosure proposes a data processing method based on a large language model. As shown in FIG. 3, which is a schematic flowchart of the method, the method can include steps 301 to 308.

In step 301, a first input question in an original data format is obtained.

For example, a question in an original data format inputted by a user can be received, referred to as the first input question. The first input question in the original data format can be obtained in other ways, which is not limited.

In step 302, the original data format of the first input question is determined. If the original data format is an image data format, proceed to step 303. If the original data format is a speech data format, proceed to step 304. If the original data format is a video data format, proceed to step 305. If the original data format is a text data format, proceed to step 306. The above are just a few examples of the original data format, and there is no restriction on the original data format.

In an example, if the first input question is input question in an image data format, it is determined that the original data format is the image data format. Or, if the first input question is input question in a speech data format, it is determined that the original data format is the speech data format. Or, if the first input question is input question in a video data format, it is determined that the original data format is the video data format. Or, if the first input question is input question in a text data format, it is determined that the original data format is the text data format.

In step 303, if the original data format is the image data format, the first input question in the image data format is converted into a second input question in a text data format by adopting an image-to-text conversion algorithm. After step 303, step 306 can also be performed.

In an example, the image-to-text conversion algorithm can include, but is not limited to, Bootstrapping Language-Image Pre-training (BLIP) algorithm, BLIP2 algorithm. The first input question in the image data format can be converted into the second input question in the text data format through the BLIP algorithm or BLIP2 algorithm. The BLIP algorithm or BLIP2 algorithm are just examples, and there is no restriction on the algorithm. Any algorithm capable of converting the first input question in an image data format into the second input question in a text data format is acceptable.

For example, an example of the BLIP2 algorithm can be seen in FIG. 4A. The BLIP2 algorithm can include an image encoder and a Q-Former. The Q-Former can include a first sub-network (can be multiple) and a second sub-network (can be multiple). The first sub-network can include a self-attention network layer, a cross attention network layer, and a feed-forward network layer. The second sub-network can include a self-attention network layer and a feed-forward network layer.

In the training process, sample images can be provided to the image encoder to obtain a plurality of image features. The plurality of image features and learned queries serve as input features of the first sub-network, and image-text matching features are output by the first sub-network. Text description features corresponding to the sample images can serve as input features of the second sub-network, and text generation features based on the images are output by the second sub-network. Then, the Q-Former is trained based on the image-text matching features and the text generation features based on the images.

In use, the image to be detected (i.e., the first input question in the image data format, that is, the first input question is an image) is provided to the image encoder to obtain a plurality of image features. The plurality of image features and learned queries serve as input features of the first sub-network. The second input question in the text data format is output by the first sub-network. That is, the second input question is a description of the first input question by text.

Thus, the first input question in the image data format can be converted into the second input question in the text data format by the BLIP2 algorithm, where the second input question is a description of the first input question by text.

In an example, the Q-Former of the BLIP2 algorithm can support a plurality of modes, for example, Language Mode (LM) and Image-Text Matching (ITM) mode, etc. If the LM mode of Q-Former is selected, Q-Former can output text data. If the ITM mode of Q-Former is selected, Q-Former can output embedding data.

Based on this, to output text data, the LM mode of Q-Former can be selected. In LM mode, the first input question in an image data format can be provided to the image encoder to obtain a plurality of image features. The plurality of image features and learned queries serve as input features for the first sub-network, and the second input question in a text data format is output by the first sub-network. This process will not be repeated herein.

In step 304, if the original data format is the speech data format, the first input question in the speech data format is converted into a second input question in a text data format by adopting a speech-to-text conversion algorithm. After step 304, step 306 can also be performed.

In an example, the speech-to-text conversion algorithm can include, but is not limited to, whisper algorithm. The first input question in the speech data format can be converted into the second input question in the text data format through the whisper algorithm. The whisper algorithm is just an example, and there is no restriction on the algorithm. Any algorithm capable of converting the first input question in a speech data format into the second input question in a text data format is acceptable.

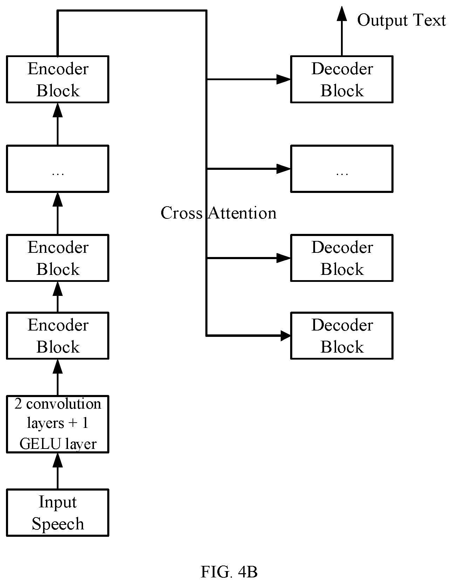

For example, an example of the whisper algorithm can be seen in FIG. 4B. The whisper algorithm can include a first sub-network (for example, the first sub-network includes two convolution layers and one Gaussian error linear unit (GELU) layer), a second sub-network (for example, the second sub-network includes multiple encoder blocks), and a third sub-network (for example, the third sub-network includes multiple decoder blocks), with a cross attention layer between the second sub-network and the third sub-network.

The speech to be detected (i.e., the first input question in the speech data format, that is, the first input question is a speech) is provided to the whisper algorithm. The speech to be detected is processed by the whisper algorithm, and the second input question in a text data format is output. That is, the second input question is a description of the first input question by text.

Thus, the first input question in the speech data format can be converted into the second input question in the text data format by the whisper algorithm, where the second input question is a description of the first input question by text.

In step 305, if the original data format is the video data format, the first input question in the video data format is converted into a second input question in a text data format by adopting a video-to-text conversion algorithm. After step 305, step 306 can also be performed.

In an example, the first input question in the video data format (that is, the first input question is a video) is converted into the second input question in the text data format by adopting the video-to-text conversion algorithm. That is, the second input question is a description of the first input question by text. There is no restriction on the conversion algorithm, as long as the first input question in the video data format can be converted into the second input question in the text data format.

In an example, the first input question in the video data format (i.e., a video) can be decomposed into a plurality of images, and the decomposition process is not limited. For each image, an image-to-text conversion algorithm, such as the BLIP algorithm or BLIP2 algorithm, can be used to convert the image into a text in the text data format. Then, a plurality of texts corresponding to the plurality of images can be combined to obtain the second input question in the text data format.

Thus, the first input question in the video data format can be converted into the second input question in the text data format, where the second input question is a description of the first input question by text.

In step 306, the input question in the text data format is input into the target large language model.

In an example, for the first input question in an image data format, after converting the first input question in the image data format into the second input question in a text data format, a first token identifier and a second token identifier corresponding to the image data format can be obtained. The first token identifier is used to indicate a starting position of the second input question, and the second token identifier is used to indicate an ending position of the second input question.

The first token identifier is added before the second input question, and the second token identifier is added after the second input question to obtain the modified second input question in the text data format. After obtaining the modified second input question, the modified second input question is inputted into the target large language model.

For example, the first token identifier corresponding to the image data format can be <IMG>, and the second token identifier corresponding to the image data format can be <\IMG>. Thus, the modified second input question can be: <IMG>AAA<\IMG>, where <IMG> indicates the starting position of the second input question, AAA represents the second input question in the text data format, and <\IMG> indicates the ending position of the second input question.

In an example, for the first input question in a speech data format, after converting the first input question in the speech data format into a second input question in a text data format, a first token identifier and a second token identifier corresponding to the speech data format can be obtained. The first token identifier is used to indicate a starting position of the second input question, and the second token identifier is used to indicate an ending position of the second input question.

The first token identifier is added before the second input question, and the second token identifier is added after the second input question to obtain the modified second input question in the text data format. After obtaining the modified second input question, the modified second input question is inputted into the target large language model.

For example, the first token identifier corresponding to the speech data format can be <SPEECH>, and the second token identifier corresponding to the speech data format can be <\SPEECH>. Thus, the modified second input question can be: <SPEECH>AAA<\SPEECH>, where <SPEECH> indicates the starting position of the second input question, AAA represents the second input question in the text data format, and <\SPEECH> indicates the ending position of the second input question.

In an example, for the first input question in a video data format, after converting the first input question in the video data format into the second input question in a text data format, a first token identifier and a second token identifier corresponding to the video data format can be obtained. The first token identifier is used to indicate a starting position of the second input question, and the second token identifier is used to indicate an ending position of the second input question.

The first token identifier is added before the second input question, and the second token identifier is added after the second input question to obtain the modified second input question in the text data format. After obtaining the modified second input question, the modified second input question is inputted into the target large language model.

For example, the first token identifier corresponding to the video data format can be <VD>, and the second token identifier corresponding to the video data format can be <\VD>. Thus, the modified second input question can be: <VD>AAA<\VD>, where <VD> indicates the starting position of the second input question, AAA represents the second input question in the text data format, and <\VD> indicates the ending position of the second input question.

In an example, for the first input question in a text data format, the first input question in the text data format can be directly inputted into the target large language model, and the process is not limited.

In step 307, a first target answer in a text data format is output through the target large language model.

In an example, if the input to the target large language model is <IMG>AAA<\IMG>, the target large language model can take the data content between <IMG> and <\IMG> as the input question (i.e., the second input question). Then, the target large language model obtains the first target answer in the text data format corresponding to the input question through analysis and reasoning, and outputs the first target answer in the text data format.

When the target large language model outputs the first target answer, the first target answer is preceded by a first token identifier, and followed by a second token identifier. The first token identifier indicates the starting position of the first target answer and the second token identifier indicates the ending position of the first target answer. For example, if the target large language model outputs <IMG>BBB<\IMG>, <IMG> indicates the starting position of the first target answer, <\IMG> indicates the ending position of the first target answer, and BBB represents the first target answer in the text data format.

In an example, if the input to the target large language model is <SPEECH>AAA<\SPEECH>, the target large language model can take the data content between <SPEECH> and <\SPEECH> as the input question (i.e., the second input question). Then, the target large language model obtains the first target answer in the text data format corresponding to the input question through analysis and reasoning, and outputs the first target answer in the text data format.

When the target large language model outputs the first target answer, the first target answer is preceded by a first token identifier, and followed by a second token identifier. The first token identifier indicates the starting position of the first target answer and the second token identifier indicates the ending position of the first target answer. For example, if the target large language model outputs <SPEECH>BBB<\SPEECH>, <SPEECH> indicates the starting position of the first target answer, <\SPEECH> indicates the ending position of the first target answer, and BBB represents the first target answer.

In an example, if the input to the target large language model is <VD>AAA<\VD>, the target large language model can take the data content between <VD> and <\VD> as the input question (i.e., the second input question). Then, the target large language model obtains the first target answer in the text data format corresponding to the input question through analysis and reasoning, and outputs the first target answer in the text data format.

When the target large language model outputs the first target answer, the first target answer is preceded by a first token identifier, and followed by a second token identifier. The first token identifier indicates the starting position of the first target answer and the second token identifier indicates the ending position of the first target answer. For example, if the target large language model outputs <VD>BBB<\VD>, <VD> indicates the starting position of the first target answer, <\VD> indicates the ending position of the first target answer, and BBB represents the first target answer in the text data format.

In an example, if the input to the target large language model is AAA, the model can take AAA as the input question (i.e., the first input question). Then, the target large language model obtains the first target answer in the text data format corresponding to the input question through analysis and reasoning, and outputs the first target answer.

In an example, when obtaining an input question in a text data format (for example, the first input question or the second input question), the target large language model can perform Tokenizer conversion on the input question to obtain embedding data, analyze and reason based on the embedding data to obtain an inference result, and perform de-Tokenizer conversion on the inference result to obtain the first target answer in the text data format.

In step 308, the first target answer is converted into a second target answer in the original data format.

In an example, if the target large language model outputs <IMG>BBB<\IMG>, based on the data content output by the target large language model, the data content (BBB) between the first token identifier and the second token identifier can be determined as the first target answer. Then, the original data format corresponding to the first token identifier or the second token identifier, that is, the image data format which corresponds to<IMG> or <\IMG>, is determined. The first target answer can then be converted into the second target answer in the image data format.

For example, since the original data format is the image data format, the first target answer in the text data format is converted into the second target answer in the image data format by adopting a text-to-image conversion algorithm.

For example, the text-to-image conversion algorithm can include, but is not limited to, Stable Diffusion (SD) algorithm. The first target answer in the text data format can be converted into a second target answer in the image data format by the SD algorithm. The SD algorithm is just an example, and there is no restriction on the algorithm. any algorithm capable of converting the first target answer in a text data format into the second target answer in an image data format is acceptable.

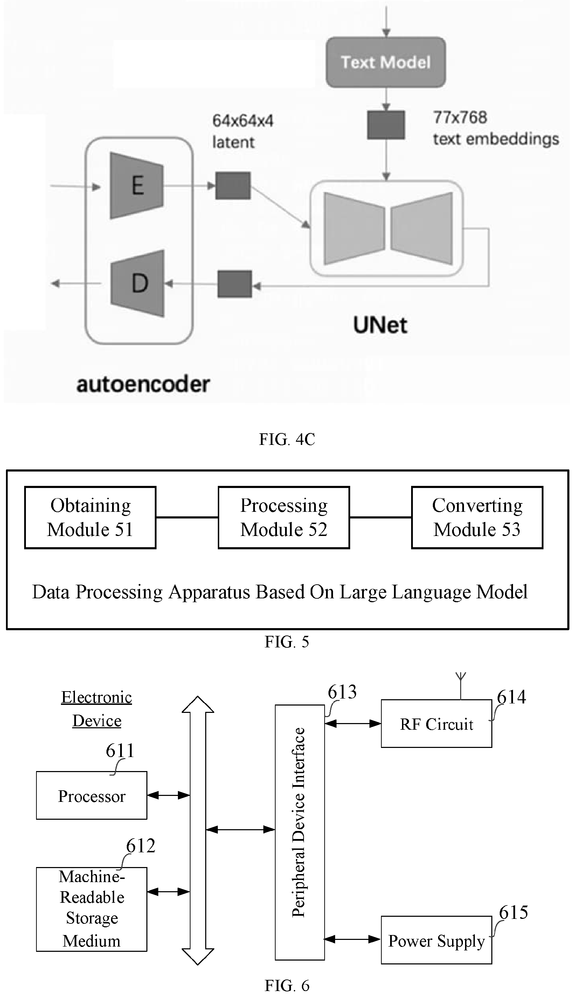

For example, an example of the SD algorithm can be seen in FIG. 4C. The SD algorithm can include a text model, a UNet network, and an autoencoder, and the like.

In use, the text to be detected (i.e., the first target answer in the text data format, that is, the first target answer is a text) can be provided to the text model to obtain text embeddings. By inputting the text embeddings into the UNet network and autoencoder, the second target answer in an image data format can be obtained. That is, the second target answer is a description of the first target answer by image.

In an example, if the target large language model outputs <SPEECH>BBB<\SPEECH>, based on the data content output by the target large language model, the data content (BBB) between the first token identifier and the second token identifier can be determined as the first target answer. Then, the original data format corresponding to the first token identifier or the second token identifier, i.e., the speech data format which corresponds to <SPEECH> or <\SPEECH>, is determined. The first target answer can then be converted into the second target answer in the speech data format.

For example, since the original data format is the speech data format, the first target answer in the text data format is converted into the second target answer in the speech data format by adopting a text-to-speech conversion algorithm.

For example, the text-to-speech conversion algorithm (also referred to as speech synthesis algorithm) can include, but is not limited to, text-to-speech (TTS) algorithm, Azure TTS algorithm, Amazon Polly algorithm, etc. The first target answer in the text data format can be converted into a second target answer in the speech data format by the TTS algorithm, Azure TTS algorithm, or Amazon Polly algorithm. The TTS algorithm, Azure TTS algorithm, and Amazon Polly algorithm are just examples, and there is no restriction on the algorithm. Any algorithm capable of converting the first target answer in a text data format into the second target answer in a speech data format is acceptable.

In an example, if the target large language model outputs <VD>BBB<\VD>, based on the data content output by the model, the data content (BBB) between the first token identifier and the second token identifier can be determined as the first target answer. Then, the original data format corresponding to the first token identifier or the second token identifier, that is, the video data format which corresponds to <VD> or <\VD>, is determined. The first target answer can then be converted into the second target answer in the video data format.

For example, since the original data format is the video data format, the first target answer in the text data format is converted into the second target answer in the video data format by adopting a text-to-video conversion algorithm.

For example, the first target answer in the text data format can be converted into the second target answer in the video data format by adopting a text-to-video conversion algorithm, and the conversion process is not limited. Or, the first target answer in the text data format can be converted into a plurality of images by adopting a text-to-image conversion algorithm, and then the plurality of images can be combined into the second target answer in a video data format.

Thus, the second target answer in the original data format can be obtained, and the analysis and reasoning process can be completed.

In an example, the training process for the target large language model may include, but is not limited to:
a sample data set is obtained, where the sample data set can include a plurality of sample questions and sample labels corresponding to the plurality of sample questions (i.e., sample answers corresponding to the plurality of sample questions). The sample questions can be in a text data format, and the sample labels can be in a text data format. Based on one or more sample questions (for example, multiple sample questions) and sample labels corresponding to the one or more sample questions in the sample data set, an initial large language model to be trained is trained to obtain a trained candidate large language model. The training process is not limited in this embodiment.

After the candidate large language model is obtained, the candidate large language model can be taken as the target large language model.

Or, after the candidate large language model is obtained, the candidate large language model can be fine-tuned, so that the candidate large language model supports token identifiers, and a fine-tuned target large language model can be obtained.

For the fine-tuning process of the candidate large language model, a part of the plurality of the sample questions can be selected from the sample data set as reference sample questions. For each reference sample question, a first token identifier in any data format (for example, image data format, speech data format, video data format) is added before the reference sample question, a second token identifier in the data format is added after the reference sample question.

For example, for some reference sample questions, <IMG> is added before these reference sample questions and <\IMG> is added after these reference sample questions. For some reference sample questions, <SPEECH> is added before these reference sample questions and <\SPEECH> is added after these reference sample questions. For some reference sample questions, <VD> is added before these reference sample questions and <\VD> is added after these reference sample questions. Based on the above processing, the modified reference sample questions can be obtained.

Based on the modified reference sample questions and sample labels corresponding to the modified reference sample questions, the candidate large language model is trained to obtain the target large language model. The training process is not limited in this embodiment.

In an example, when training the initial large language model to obtain a candidate large language model, both input and output of the initial large language model are in the text data format, eliminating the need for adaptor modules (linear mapping layer for alignment) at the input side and the output side. This avoids the tedious alignment training at the input side and the output side.

After the candidate large language model is obtained by training, the target large language model can be obtained by fine-tuning the candidate large language model, as long as the target large language model supports token identifiers.

It can be seen from the above technical solution that in the embodiments of the present disclosure, the target answer can be obtained by means of the target large language model, and an accurate and reliable target answer is obtained through inputting the input question in the text data format. It only needs to consume a small amount of computing resources to query the target answer corresponding to the input question from a large amount of data. It takes less time to obtain the target answer, thereby saving computing resources of the server and time overhead. The target answer corresponding to the input question can be quick determined, logical analysis and reasoning capabilities are provided, and an accurate and reliable target answer is given by using the analysis capability of the target large language model. Moreover, multimodal data (for example, images, videos, speeches and other data) is converted into text data and the text data is input to the target large language model, which enables the target large language model to support multimodal data. The target large language model only needs to support input and output of text data, so as to meet input and output requirements of multimodal data, and support functions of a multimodal large language model.

The target large language model directly processes text data, eliminating the linear mapping layer at the input side and the output side, removing the need for the alignment of the input side with the target large language model and the alignment of the output side with the target large language model, and avoiding cumbersome alignment training. This greatly simplifies the training process of the target large language model, meeting more business requirements.

Based on the same invention concept, a data processing apparatus based on a large language model and an electronic device corresponding to the above data processing method based on a large language model are also provided. Since the principle of solving problems by the data processing apparatus and the electronic device is similar to that of solving problems by the data processing method based on the large language model, the implementation of the data processing apparatus and the electronic device can refer to the data processing method based on the large language model, and repetitions are not elaborated herein.

Based on the same application concept as the above method, an embodiment of the present disclosure proposes a data processing apparatus based on a large language model. FIG. 5 is a schematic structural diagram of the apparatus. The apparatus can include:
an obtaining module 51, configured to obtain a first input question in an original data format; if the original data format is not a text data format, convert the first input question into a second input question in a text data format;
a processing module 52, configured to input the second input question to a trained target large language model, a first target answer in a text data format corresponding to the second input question being output by the target large language model; and
a converting module 53, configured to convert the first target answer into a second target answer in the original data format.

In an example, when converting the first input question into the second input question in the text data format, the obtaining module 51 is specifically configured to: if the original data format is an image data format, convert the first input question in the image data format into the second input question in the text data format by adopting an image-to-text conversion algorithm; or, if the original data format is a speech data format, convert the first input question in the speech data format into the second input question in the text data format by adopting a speech-to-text conversion algorithm; or, if the original data format is a video data format, convert the first input question in the video data format into the second input question in the text data format by adopting a video-to-text conversion algorithm.

In an example, when converting the first target answer into the second target answer in the original data format, the converting module 53 is specifically configured to: if the original data format is an image data format, convert the first target answer in the text data format into the second target answer in the image data format by adopting a text-to-image conversion algorithm; or, if the original data format is a speech data format, convert the first target answer in the text data format into the second target answer in the speech data format by adopting a text-to-speech conversion algorithm; or, if the original data format is a video data format, convert the first target answer in the text data format into the second target answer in the video data format by adopting a text-to-video conversion algorithm.

In an example, when inputting the second input question to the trained target large language model, the first target answer in the text data format corresponding to the second input question being output by the target large language model, the processing module 52 is specifically configured to: obtain a first token identifier and a second token identifier corresponding to the original data format; add the first token identifier before the second input question and add the second token identifier after the second input question; where the first token identifier indicates a starting position of the second input question, and the second token identifier indicates an ending position of the second input question; input the second input question after modifying to the target large language model, the first target answer in the text data format corresponding to the second input question being output by the target large language model.

The first target answer is preceded by the first token identifier, the first target answer is followed by the second token identifier, the first token identifier indicates a starting position of the first target answer, and the second token identifier indicates an ending position of the first target answer.

In an embodiment, when converting the first target answer into the second target answer in the original data format, the converting module 53 is specifically configured to: based on data content output by the target large language model, determine data content between the first token identifier and the second token identifier as the first target answer; determine the original data format corresponding to the first token identifier or the second token identifier; and convert the first target answer into the second target answer in the original data format.

In an example, the apparatus further includes: a training module, configured to train to obtain the target large language model. When training to obtain the target large language model, the training module is specifically configured to:
obtain a sample data set, where the sample data set includes a plurality of sample questions and sample labels corresponding to the plurality of sample questions, where the plurality of sample questions are in a text data format, and the sample labels are in a text data format;
based on one or more sample questions and sample labels corresponding to the one or more sample questions in the sample data set, train an initial large language model to be trained to obtain a trained candidate large language model; and
take the candidate large language model as the target large language model; or,
select a part of the plurality of the sample questions from the sample data set as reference sample questions, for each of the reference sample questions, add a first token identifier in any data format before the reference sample question, add a second token identifier in the data format after the reference sample question, and based on the reference sample questions after modifying and sample labels corresponding to the reference sample questions, train the candidate large language model to obtain the target large language model.

Based on the same concept as the above method, an embodiment of the present disclosure proposes an electronic device. As shown in FIG. 6, the electronic device includes a processor 611 and a machine-readable storage medium 612. The machine-readable storage medium 612 stores machine-executable instructions that can be executed by the processor 611. The processor 611 is configured to execute the machine-executable instructions to implement the data processing method based on a large language model disclosed in the above examples.

In an example, the processor 611 can include one or more processing cores, such as a 4-core processor, an 8-core processor. The processor 611 can be implemented in at least one hardware form among Digital Signal Processing (DSP), Field-Programmable Gate Array (FPGA), Programmable Logic Array (PLA).

The processor 611 can also include a main processor and a co-processor. The main processor is a processor for processing data in a wake-up state, also referred to as Central Processing Unit (CPU). The co-processor is a low-power processor for processing data in a standby state.

In some embodiments, the processor 611 can be integrated with a Graphics Processing Unit (GPU), which is used for rendering and drawing the contents to be displayed on a display screen.

In an example, the electronic device may optionally include a peripheral device interface 613 and at least one peripheral device. The processor 611 can be connected to the peripheral device interface 613 by a bus or signal lines. Various peripheral devices can be connected to the peripheral device interface 613 by buses, signal lines, or circuit boards. The peripheral devices can include at least one of a radio frequency (RF) circuit 614 and a power supply 615.

The RF circuit 614 is configured to receive and transmit RF signals, also referred to as electromagnetic signals. The RF circuit 614 communicates with communication networks and other communication devices through electromagnetic signals. The RF circuit 614 converts electrical signals into electromagnetic signals for transmission, or converts received electromagnetic signals into electrical signals. Optionally, the RF circuit 614 may include an antenna system, an RF transceiver, one or more amplifiers, a tuner, an oscillator, a digital signal processor, a user identity module card, etc.

The RF circuit 614 can communicate with user equipment through at least one wireless communication protocol. The wireless communication protocol includes but not limited to: World Wide Web, metropolitan area network, intranet, various generations of mobile communication networks (2G, 3G, 4G, and 5G), wireless local area network, and/or Wireless Fidelity (WiFi) network.

The power supply 615 is used to supply power to various components in the electronic device. The power supply 615 can be alternating current (AC), direct current (DC), a disposable battery, or a rechargeable battery.

Based on the same application concept as the above method, an embodiment of the present disclosure also provides a machine-readable storage medium storing a number of computer instructions. When executed by a processor, the computer instructions can implement the data processing method based on a large language model disclosed in the above examples of the present disclosure.

The above machine-readable storage medium can be any electronic, magnetic, optical, or other physical storage device that can contain or store information, such as executable instructions, data. For example, the machine-readable storage medium can be a Random Access Memory (RAM), a volatile memory, a non-volatile memory, a flash memory, a storage drives (such as a hard disk drive), a solid-state drive, any type of storage disk (such as optical disk, DVD), or similar storage medium, or a combination thereof.

The systems, devices, modules, or units described in the above examples can be implemented by a computing entity or by products with certain functions. A typical implementation device can be a computer. The specific form of the computer can be a personal computer, a laptop computer, a cellular phone, a camera phone, a smart phone, a personal digital assistant, a media player, a navigation device, an email receiving and sending device, a game console, a tablet computer, a wearable device or a combination of any of these devices.

For convenience of description, the above apparatus is divided into various units in terms of function and is described separately. In implementing the present disclosure, the functions of various units can be implemented in the same or multiple software and/or hardware.

The persons skilled in the art should understand that the examples of the present disclosure can be provided as a method, a system, or a computer program product. Thus, entire hardware examples, entire software examples or examples combining software and hardware can be adopted in the present disclosure. Further, the examples of the present disclosure can be implemented in the form of a computer program product that is operated on one or more computer available storage media (including but not limited to magnetic disk memory, CD-ROM, and optical memory and so on) including computer available program codes.

The present disclosure is described by referring to flowcharts and/or block diagrams of a method, a device (a system) and a computer program product in examples of the present disclosure. It is understood that each flowchart and/or block in the flowcharts and/or the block diagrams or a combination of a flow chart and/or a block of the flowcharts and/or the block diagrams can be implemented by computer program instructions. These computer program instructions can be provided to a general-purpose computer, a dedicated computer, an embedded processor, or a processor of another programmable data processing device to generate a machine so that the instructions executable by a computer or a processor of another programmable data processing device generate an apparatus for implementing functions designated in one or more flows of the flowcharts and/or one or more blocks of the block diagrams.

Further, these computer program instructions can also be stored in a computer readable memory that can direct a computer or another programmable data processing device to work in a particular manner so that the instructions stored in the computer readable memory generate a product including an instruction apparatus and the instruction apparatus can implement functions designated in one or more flows of the flowcharts and/or one or more blocks of the block diagrams.

The computer program instructions can also be loaded on a computer or another programmable data processing device, so that a series of operation steps can be executed on the computer or another programmable device to generate processing achieved by the computer, and thus instructions executable on the computer or another programmable device are provided for steps for realizing functions designated in one or more flows of the flowcharts and/or one or more blocks of the block diagrams.

The foregoing descriptions are made to embodiments of the present disclosure but not intended to limit the present disclosure. For those skilled in the art, various modifications and variations can be made to the present disclosure. Any modifications, equivalent substitutions and improvements made within the spirit and principle of the present disclosure shall all fall within the scope of protection of the present disclosure.

## Claims

1. A data processing method based on a large language model, comprising:
obtaining a first input question in an original data format; if the original data format is not a text data format, converting the first input question into a second input question in a text data format;
inputting the second input question to a trained target large language model, a first target answer in a text data format corresponding to the second input question being output by the target large language model; and
converting the first target answer into a second target answer in the original data format.

2. The method according to claim 1, wherein converting the first input question into the second input question in the text data format comprises:
if the original data format is an image data format, converting the first input question in the image data format into the second input question in the text data format by adopting an image-to-text conversion algorithm; or,
if the original data format is a speech data format, converting the first input question in the speech data format into the second input question in the text data format by adopting a speech-to-text conversion algorithm; or,
if the original data format is a video data format, converting the first input question in the video data format into the second input question in the text data format by adopting a video-to-text conversion algorithm.

3. The method according to claim 1 or 2, wherein converting the first target answer into the second target answer in the original data format comprises:
if the original data format is an image data format, converting the first target answer in the text data format into the second target answer in the image data format by adopting a text-to-image conversion algorithm; or,
if the original data format is a speech data format, converting the first target answer in the text data format into the second target answer in the speech data format by adopting a text-to-speech conversion algorithm; or,
if the original data format is a video data format, converting the first target answer in the text data format into the second target answer in the video data format by adopting a text-to-video conversion algorithm.

4. The method according to claim 1, wherein inputting the second input question to the trained target large language model, the first target answer in the text data format corresponding to the second input question being output by the target large language model comprises:
obtaining a first token identifier and a second token identifier corresponding to the original data format;
adding the first token identifier before the second input question and adding the second token identifier after the second input question; wherein the first token identifier indicates a starting position of the second input question, and the second token identifier indicates an ending position of the second input question;
inputting the second input question after modifying to the target large language model, the first target answer in the text data format corresponding to the second input question being output by the target large language model;
wherein, the first target answer is preceded by the first token identifier, the first target answer is followed by the second token identifier, the first token identifier indicates a starting position of the first target answer, and the second token identifier indicates an ending position of the first target answer.

5. The method according to claim 4, wherein converting the first target answer into the second target answer in the original data format comprises:
based on data content output by the target large language model, determining data content between the first token identifier and the second token identifier as the first target answer;
determining the original data format corresponding to the first token identifier or the second token identifier; and
converting the first target answer into the second target answer in the original data format.

6. The method according to claim 1, wherein a training process for the target large language model comprises:
obtaining a sample data set, wherein the sample data set comprises a plurality of sample questions and sample labels corresponding to the plurality of sample questions, wherein the plurality of sample questions are in a text data format, and the sample labels are in a text data format;
based on one or more sample questions and sample labels corresponding to the one or more sample questions in the sample data set, training an initial large language model to be trained to obtain a trained candidate large language model; and
taking the candidate large language model as the target large language model; or, selecting a part of the plurality of the sample questions from the sample data set as reference sample questions, for each of the reference sample questions, adding a first token identifier in any data format before the reference sample question, adding a second token identifier in the data format after the reference sample question, and based on the reference sample questions after modifying and sample labels corresponding to the reference sample questions, training the candidate large language model to obtain the target large language model.

7. A data processing apparatus based on a large language model, comprising:
an obtaining module, configured to obtain a first input question in an original data format; if the original data format is not a text data format, convert the first input question into a second input question in a text data format;
a processing module, configured to input the second input question to a trained target large language model, a first target answer in a text data format corresponding to the second input question being output by the target large language model; and
a converting module, configured to convert the first target answer into a second target answer in the original data format.

8. The apparatus according to claim 7, wherein when converting the first input question into the second input question in the text data format, the obtaining module is specifically configured to:
if the original data format is an image data format, convert the first input question in the image data format into the second input question in the text data format by adopting an image-to-text conversion algorithm; or,
if the original data format is a speech data format, convert the first input question in the speech data format into the second input question in the text data format by adopting a speech-to-text conversion algorithm; or,
if the original data format is a video data format, convert the first input question in the video data format into the second input question in the text data format by adopting a video-to-text conversion algorithm.

9. The apparatus according to claim 7 or 8, wherein when converting the first target answer into the second target answer in the original data format, the converting module is specifically configured to:
if the original data format is an image data format, convert the first target answer in the text data format into the second target answer in the image data format by adopting a text-to-image conversion algorithm; or,
if the original data format is a speech data format, convert the first target answer in the text data format into the second target answer in the speech data format by adopting a text-to-speech conversion algorithm; or,
if the original data format is a video data format, convert the first target answer in the text data format into the second target answer in the video data format by adopting a text-to-video conversion algorithm.

10. The apparatus according to claim 7, wherein when inputting the second input question to the trained target large language model, the first target answer in the text data format corresponding to the second input question being output by the target large language model, the processing module is specifically configured to:
obtain a first token identifier and a second token identifier corresponding to the original data format;
add the first token identifier before the second input question and add the second token identifier after the second input question; wherein the first token identifier indicates a starting position of the second input question, and the second token identifier indicates an ending position of the second input question;
input the second input question after modifying to the target large language model, the first target answer in the text data format corresponding to the second input question being output by the target large language model;
wherein, the first target answer is preceded by the first token identifier, the first target answer is followed by the second token identifier, the first token identifier indicates a starting position of the first target answer, and the second token identifier indicates an ending position of the first target answer.

11. The apparatus according to claim 10, wherein when converting the first target answer into the second target answer in the original data format, the converting module is specifically configured to:
based on data content output by the target large language model, determine data content between the first token identifier and the second token identifier as the first target answer;
determine the original data format corresponding to the first token identifier or the second token identifier; and
convert the first target answer into the second target answer in the original data format.

12. The apparatus according to claim 7, further comprising:
a training module, configured to train to obtain the target large language model;
wherein when training to obtain the target large language model, the training module is specifically configured to:
obtain a sample data set, wherein the sample data set comprises a plurality of sample questions and sample labels corresponding to the plurality of sample questions, wherein the plurality of sample questions are in a text data format, and the sample labels are in a text data format;
based on one or more sample questions and sample labels corresponding to the one or more sample questions in the sample data set, train an initial large language model to be trained to obtain a trained candidate large language model; and
take the candidate large language model as the target large language model; or, select a part of the plurality of the sample questions from the sample data set as reference sample questions, for each of the reference sample questions, add a first token identifier in any data format before the reference sample question, add a second token identifier in the data format after the reference sample question, and based on the reference sample questions after modifying and sample labels corresponding to the reference sample questions, train the candidate large language model to obtain the target large language model.

13. An electronic device, comprising a processor and a machine-readable storage medium, wherein the machine-readable storage medium stores machine-executable instructions executable by the processor, and the processor is configured to execute the machine-executable instructions to implement the method according any one of claims 1-7.
